# EUROPÄISCHE PATENTSCHRIFT

(11) **EP 3 476 562 B1**
(45) Veröffentlichungstag und Bekanntmachung des Hinweises auf die Patenterteilung: **15.04.2020**
(21) Anmeldenummer: 18000796.5
(22) Anmeldetag: 08.10.2018
(51) Int. Cl.: B29C 45/00, B29C 37/00, H02G 9/10, H02B 1/30, H02G 9/06, H02G 3/08

(54) **WANDELEMENT AUS GESCHÄUMTEM KUNSTSTOFF MIT SOLLBRUCHFLÄCHE**
WALL ELEMENT MADE OF FOAMED PLASTIC WITH A RUPTURABLE AREA
ÉLÉMENT MURAL EN MATIÈRE PLASTIQUE ALVÉOLAIRE POURVU DE SURFACE DE RUPTURE

(30) Priorität: 30.10.2017 DE 102017010082
(43) Veröffentlichungstag der Anmeldung: 01.05.2019
(73) Patentinhaber: Langmatz GmbH, 82467 Garmisch-Partenkirchen (DE)
(72) Erfinder: Hutter, Michael, 82497 Unterammergau (DE); Fischer, Ludwig, 82487 Oberammergau (DE)
(74) Vertreter: Flosdorff, Jürgen

(56) Entgegenhaltungen:
- EP-A1- 2 463 212
- DE-B3- 10 314 897
- DE-B3-102007 020 075

## Beschreibung

Die Erfindung betrifft allgemein Wandelemente aus geschäumtem Kunststoff, die wenigstens eine integrierte Sollbruchfläche haben, die ausbrechbar ist, um eine Wandöffnung auszubilden. Insbesondere betrifft die Erfindung Wandelemente oder Rahmenelemente von Kabelschächten, die in das Erdreich eingelassen werden und u.a. Kabel verteilen, die durch ausgebrochene Sollbruchflächen in den Kabelschacht eintreten und/oder durch derartige Wandöffnungen den Schacht verlassen.

Die Sollbruchflächen haben meist eine kreisrunde Form, ohne dass die Erfindung hierauf beschränkt ist.

Die Sollbruchflächen von Kabelschächten sind üblicherweise durch einen umlaufenden Filmanguß mit dem übrigen Wandelement verbunden. Dieser Filmanguß hat eine sehr geringe Wandstärke von beispielsweise 1 bis 2 mm, damit die Sollbruchfläche möglichst vollständig bei Bedarf ausgebrochen werden kann, ohne dass hierdurch die angrenzende Wandfläche beschädigt wird. Wenn das Wandelement mit der Sollbruchfläche im Spritzgußverfahren aus geschäumtem Kunststoff hergestellt wird, erzeugt der umlaufende Filmanguß eine beträchtliche Drosselwirkung für den in das Formwerkzeug eingespritzten Kunststoffschaum, die es erforderlich macht, mit einem hohen Einspritzdruck zu arbeiten, um das Formnest der Sollbruchfläche zu füllen. Dieser hohe Einspritzdruck hat aber die nachteilige Folge, dass das Aufschäumen des Kunststoffmaterials in der Form erheblich unterdrückt wird, so dass der Porenanteil in dem Kunststoffmaterial verringert ist.

Dies bedeutet wiederum, dass mehr Kunststoffmaterial zum Ausfüllen des Formwerkzeugs erforderlich ist und das Bauteilgewicht verhältnismäßig hoch ist.

Die EP 2 463 212 A1 offenbart einen Behälter, aus dem eine Flüssigkeit abgegeben werden soll, die zunächst in dem Behälter von einer kegelstumpfförmigen Membran eingeschlossen ist. Diese Membran ist an der Innenwand des Behälters angespritzt und enthält sternförmig zum Zentrum hin zusammenlaufende Kerben, an denen die Membran aufgebrochen werden kann. Die Figuren 19 und 20 zeigen diesen Vorgang vor der Abgabe der Flüssigkeit und während deren Abgabe, wobei Figur 20 zeigt, wie der Behälter seitlich zusammengedrückt wird, damit die Membran an den Kerblinien aufgebrochen wird. DE 103 14 897 B3 und DE 10 2007 020 075 B3 offenbaren eine Sollbruchfläche, die durch einen umlaufenden Filmanguss mit dem übrigen Wandelement verbunden ist, wobei diese Wandelemente aus einem harten, nicht geschäumten Kunststoff bestehen.

Der vorliegenden Erfindung liegt die Aufgabe zugrunde, die oben erwähnten Nachteile zu vermeiden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Sollbruchfläche mit mehreren über ihren Umfang verteilten Stegen mit dem umgebenden Wandelement verbunden ist, wobei die Sollbruchfläche zwischen diesen Stegen von dem Wandelement durch einen Spalt beabstandet ist. Diese Stege haben eine erheblich größere Dicke als der herkömmliche Filmanguß, im Falle einer Sollbruchfläche mit einem Durchmesser von 50 mm bis 160 mm, vorzugsweise etwa 110 mm, bei einem Kabelschacht eine Dicke von vorzugsweise 4 mm bis 5 mm. Die Breite der Stege beträgt vorzugsweise 8 mm bis 15 mm, vorzugsweise 10 mm.

Durch die erheblich größere Dicke der Stege ist der Drosseleffekt beim Füllen des Formnestes der Sollbruchfläche beträchtlich verringert. Diese Wirkung wird erfindungsgemäß dadurch zusätzlich verstärkt, dass die Stege bevorzugt in der Mitte der Sollbruchfläche zusammenlaufen und dass die Wandstärke der zwischen den Stegen befindlichen Wandabschnitte verringert ist. Dies führt dazu, dass ein minimaler Einspritzdruck erforderlich ist, um das gesamte Formwerkzeug mit dem Formnest der Sollbruchfläche mit Kunststoff zu füllen, der ein verbessertes Schäumungsergebnis hat, wobei der erhöhte Porenanteil zu einer beträchtlichen Materialeinsparung führt, was sich in einem deutlich reduzierten Bauteilgewicht niederschlagen kann. Außerdem ist das Kunststoffmaterial in der Form gleichmäßiger aufgeschäumt als bei dem herkömmlichen Filmanguss einer Sollbruchfläche.

Außerdem sieht die Erfindung vor, dass die Stege im Bereich der Verbindung mit dem Wandelement eine durch Aussparungen verringerte Wandstärke haben, wodurch ein verbessertes Ausbruchverhalten als bei einem Filmanguß erzielt wird.

In weiteren Einzelheiten wird vorgeschlagen, dass vier bis acht Stege ausgebildet werden, wobei sechs Stege im Falle einer kreisförmigen Sollbruchfläche am meisten zu bevorzugen sind. Alle Stege sollten dieselbe Form haben.

Des weiteren wird vorgeschlagen, dass die Wandabschnitte mit verringerter Wandstärke bei der Sollbruchfläche durch Einbuchtungen an einer Seite der Sollbruchfläche ausgebildet sind. Es hat sich gezeigt, dass hierdurch das Formnest der Sollbruchfläche besonders glatt mit minimalem Einspritzdruck gefüllt werden kann. Der Übergang der Stege zu den Einbuchtungen sollte querschnittlich schräg oder bogenförmig erfolgen. Bei einem Kabelschacht hat die Sollbruchfläche üblicherweise eine Dicke von 5 mm bis 9 mm, bevorzugt 7 mm. Die Wandabschnitte der Einbuchtungen sollten eine Dicke von 3 mm bis 5 mm, vorzugsweise 4 mm haben.

Wenn - wie dies bevorzugt ist - die Sollbruchfläche eine Kreisform hat, sollten die Wandabschnitte verringerter Wandstärke die Form von Kreisabschnitten haben.

Bevorzugte Materialien für den geschäumten Kunststoff sind PC und PET, ohne dass die Erfindung hierauf beschränkt ist.

Weitere Einzelheiten der Erfindung ergeben sich aus der nachfolgenden Beschreibung einer bevorzugten Ausführungsform eines Wandelements eines Kabelschachtes. Dabei zeigen:
- Figur 1: eine Ansicht einer Sollbruchfläche;
- Figur 2: einen Schnitt B-B durch die Sollbruchfläche der Figur 1;
- Figur 3: einen Schnitt E-E durch die Sollbruchfläche;
- Figur 4: eine vergrößerte Einzelheit C;
- Figur 5: eine vergrößerte Einzelheit I;
- Figur 6: eine vergrößerte Einzelheit G;
- Figur 7: eine Ansicht einer Seitenwand eines Kabelschachtes.

Die in Figur 7 dargestellte Seitenwand eines Rahmenelementes eines Kabelschachtes enthält drei nebeneinander ausgebildete Sollbruchflächen 1, die bei Bedarf aus der Wand ausgebrochen werden, um Kabel, Rohre oder dergleichen durch die so entstandenen Öffnungen hindurch zu führen. Das Rahmenelement ist im Spritzgußverfahren einstückig aus geschäumtem Kunststoff hergestellt.

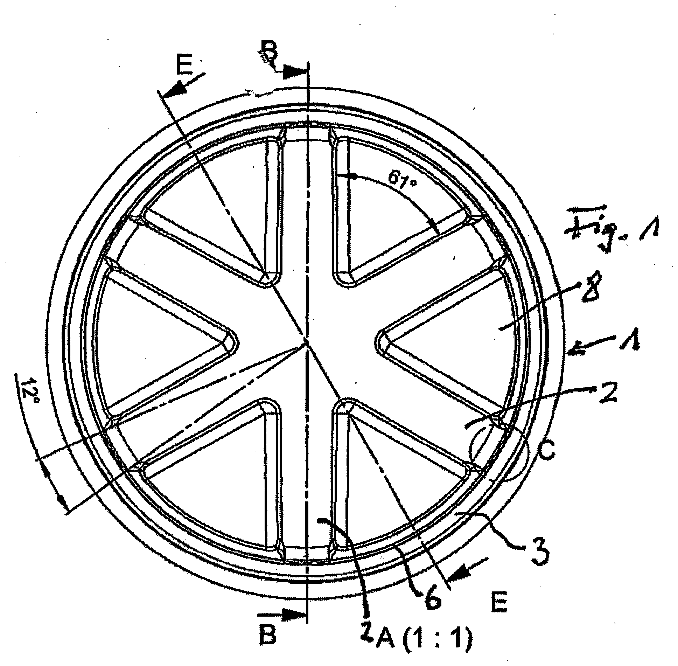

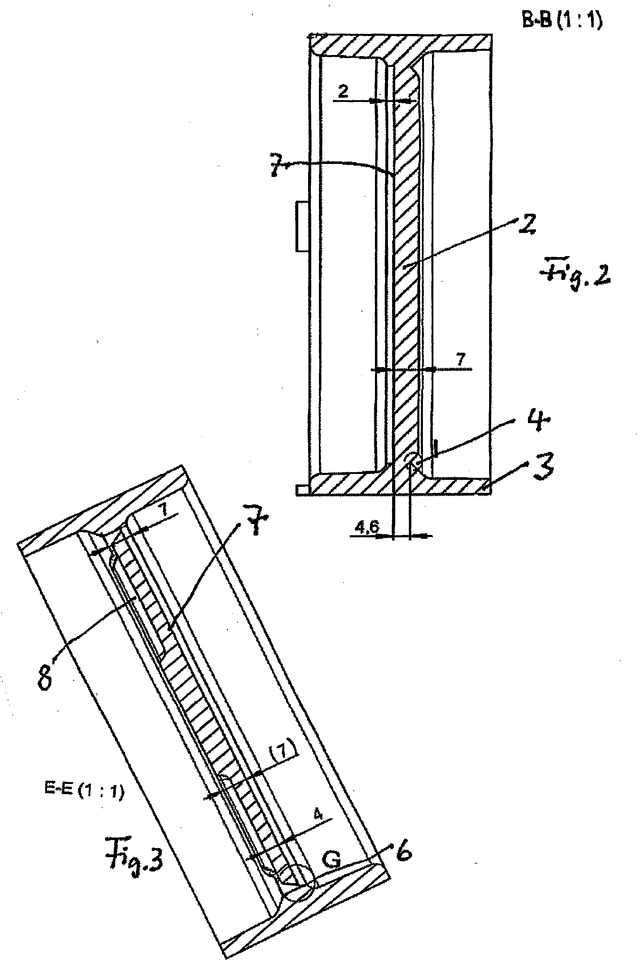

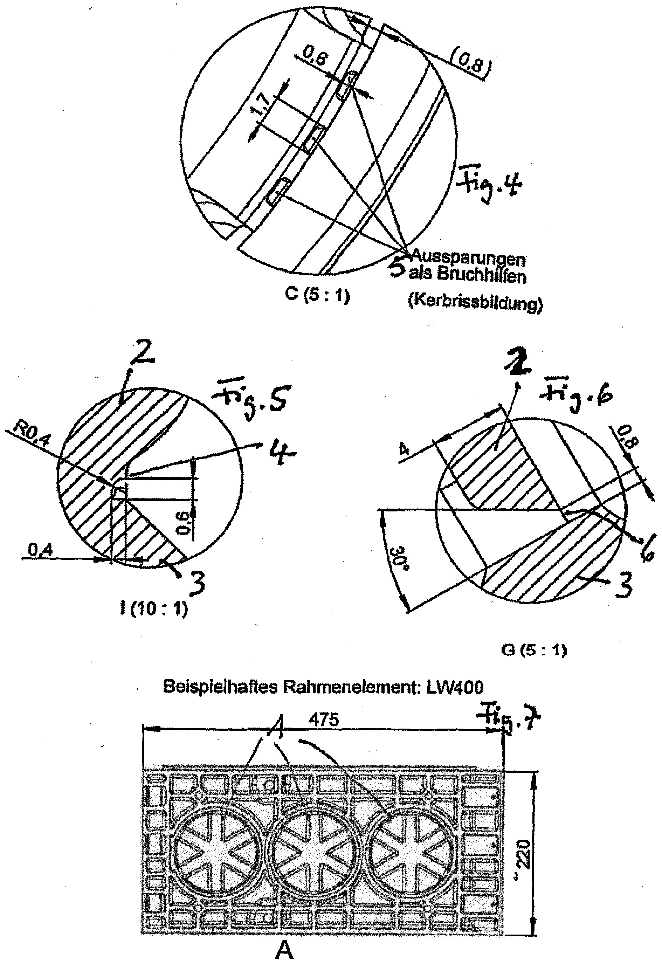

Figur 1 zeigt in einem Maßstab 1:1 eine Sollbruchfläche 1, die durch sechs Stege 2 mit der umlaufenden Wand 3 des Rahmenelementes verbunden ist. In Figur 2 ist zu sehen, dass die Stege 2 im Bereich der Verbindung mit der umlaufenden Wand 3 durch eine Einschnürung 4 eine verringerte Dicke haben, die zudem durch die in Figur 4 dargestellten Aussparungen 5 als Bruchhilfen für eine Kerbrißbildung weiter geschwächt ist.

In dem zwischen den Anbindungen der Stege 2 liegenden Umfangsbereichen ist die Sollbruchfläche 1 durch einen Spalt 6 von der umlaufenden Wandfläche 3 beabstandet.

Die Sollbruchfläche 1 hat an der Innenseite des Rahmenelementes eine durchgehend ebene Fläche 7. An der in Figur 1 sichtbaren Seite enthält diese Sollbruchfläche 1 zwischen den Anbindungen der Stege 2 an die umlaufende Wand Einbuchtungen 8, die die Wanddicke der Sollbruchfläche 1 im dargestellten Beispiel von 7 mm zu 4 mm verringern. Die Übergänge zu den Längsseiten der Stege sind dabei bogenförmig ausgebildet. Diese Einbuchtungen 8 haben zur Folge, dass die an den Anbindungen der Stege 2 beim Herstellungsprozess eintretende, aufschäumende Kunststoffmasse mit geringerem Einspritzdruck das Formnest der Sollbruchfläche füllt, wobei Kunststoffmaterial eingespart wird und die Sollbruchfläche dennoch durch die Stege die erforderliche Festigkeit hat, um dem einwirkenden Erddruck Stand zu halten.

Bezüglich der Geometrie der dargestellten Ausführungsform wird ausdrücklich auf Maßangaben in den Figuren hingewiesen.

## Patentansprüche

1. Wandelement mit wenigsten einer integrierten Sollbruchfläche, die ausbrechbar ist, um eine Wandöffnung auszubilden,
**dadurch gekennzeichnet,**
**dass** das Wandelement im Spritzgussverfahren aus einem geschäumten Kunststoff hergestellt ist,
**dass** die wenigstens eine Sollbruchfläche (1) mehrere über ihren Umfang verteilte Stege (2) aufweist, die radial außen mit dem Wandelement (3) verbunden sind, und
**dass** die wenigstens eine Sollbruchfläche (1) zwischen den Stegen (2) Wandabschnitte aufweist, die von dem Wandelement (3) durch einen Spalt (6) beabstandet sind und die eine geringere Wandstärke haben als die Stege (2).

2. Wandelement nach Anspruch 1,
**dadurch gekennzeichnet,**
**dass** vier bis acht Stege, vorzugsweise sechs Stege (2) ausgebildet sind.

3. Wandelement nach Anspruch 2,
**dadurch gekennzeichnet,**
**dass** die Stege (2) in Umfangsrichtung gleichmäßig voneinander beabstandet sind.

4. Wandelement nach einem der Ansprüche 1 bis 3,
**dadurch gekennzeichnet,**
**dass** alle Stege (2) dieselbe Form haben.

5. Wandelement nach einem der Ansprüche 1 bis 4,
**dadurch gekennzeichnet,**
**dass** die Wandabschnitte zwischen den Stegen (2) durch Einbuchtungen (8) an einer Seite der Sollbruchfläche (1) die verringerte Wandstärke haben.

6. Wandelement nach Anspruch 5,
**dadurch gekennzeichnet,**
**dass** die Einbuchtungen (8) schräg oder bogenförmig in die Stege (2) übergehen.

7. Wandelement nach einem der Ansprüche 1 bis 6,
**dadurch gekennzeichnet,**
**dass** die Sollbruchfläche (1) eine Kreisform hat und dass die Wandabschnitte verringerter Wandstärke die Form von Kreisabschnitten haben.

8. Wandelement nach einem der Ansprüche 1 bis 7,
**dadurch gekennzeichnet,**
**dass** die Stege (2) sternförmig in der Mitte der Sollbruchfläche (1) zusammenlaufen.

9. Wandelement nach einem der Ansprüche 1 bis 8,
**dadurch gekennzeichnet,**
**dass** die Stege (2) im Bereich der Verbindung mit dem Wandelement (3) eine durch Aussparung (5) verringerte Wandstärke haben

10. Wandelement nach einem der Ansprüche 1 bis 9,
**dadurch gekennzeichnet,**
**dass** das Wandelement Teil eines in die Erde einzulassenden Kabelschachtes ist.

## Claims

1. A wall element with at least one integrated rupturable area, which may be broken out in order to form a wall opening, **characterised in that** the wall element is made in an injection moulding process from foamed plastic material, that the at least one rupturable area (1) has a plurality of webs (2) distributed over its periphery, which are connected at their radially outer ends to the wall element (3), and that the at least one rupturable area (1) has wall sections between the webs (2), which are spaced from the wall element (3) by a gap (6) and which have a smaller wall thickness than the webs (2).

2. A wall element as claimed in Claim 1, **characterised in that** four to eight webs, preferably six webs (2), are provided.

3. A wall element as claimed in Claim 2, **characterised in that** the webs (2) are spaced uniformly from one another in the peripheral direction.

4. A wall element as claimed in one of Claims 1 to 3, **characterised in that** all the webs (2) have the same shape.

5. A wall element as claimed in one of Claims 1 to 4, **characterised in that** the wall sections between the webs (2) have the reduced wall thickness as a result of indentations (8) on one side of the rupturable area (1).

6. A wall element as claimed in Claim 5, **characterised in that** the indentations (8) merge into the webs (2) obliquely or in an arcuate manner.

7. A wall element as claimed in one of Claims 1 to 6, **characterised in that** the rupturable area (1) has a circular shape and that the wall sections of reduced wall thickness have the shape of segments of a circle.

8. A wall element as claimed in one of Claims 1 to 7, **characterised in that** the webs (2) converge in the shape of a star in the centre of the rupturable area (1).

9. A wall element as claimed in one of Claims 1 to 8, **characterised in that** the webs (2) have a wall thickness reduced by recesses (5) in the region of the connection to the wall element (3).

10. A wall element as claimed in one of Claims 1 to 9, **characterised in that** the wall element is a part of a cable duct to be set into the earth.

## Revendications

1. Élément mural avec au moins une surface de rupture de consigne intégrée qui peut être rompue afin de réaliser une ouverture murale,
**caractérisé en ce**
**que** l'élément mural est fabriqué dans le procédé de moulage par injection en une matière plastique alvéolaire,
**que** l'au moins une surface de rupture de consigne (1) présente plusieurs nervures (2) réparties sur sa périphérie qui sont reliées radialement vers l'extérieur à l'élément mural (3), et
**que** l'au moins une surface de rupture de consigne (1) présente entre les nervures (2) des sections murales qui sont espacées de l'élément mural (3) par une fente (6) et qui présentent une épaisseur murale plus faible que les nervures (2).

2. Élément mural selon la revendication 1,
**caractérisé en ce**
**que** quatre à huit nervures, de préférence six nervures (2) sont réalisées.

3. Élément mural selon la revendication 2,
**caractérisé en ce**
**que** les nervures (2) sont espacées uniformément dans le sens périphérique les unes des autres.

4. Élément mural selon l'une des revendications 1 à 3,
**caractérisé en ce**
**que** toutes les nervures (2) présentent la même forme.

5. Élément mural selon l'une des revendications 1 à 4,
**caractérisé en ce**
**que** les sections murales entre les nervures (2) présentent l'épaisseur murale réduite par des entailles (8) au niveau d'un côté de la surface de rupture de consigne (1).

6. Élément mural selon la revendication 5,
**caractérisé en ce**
**que** les entailles (8) passent en oblique ou en arc dans les nervures (2).

7. Élément mural selon l'une des revendications 1 à 6,
**caractérisé en ce**
**que** la surface de rupture de consigne (1) présente une forme circulaire et que les sections murales d'épaisseur murale réduite présentent la forme de sections circulaires.

8. Élément mural selon l'une des revendications 1 à 7,
**caractérisé en ce**
**que** les nervures (2) convergent en forme d'étoile au milieu de la surface de rupture de consigne (1).

9. Élément mural selon l'une des revendications 1 à 8,
**caractérisé en ce**
**que** les nervures (2) présentent dans la zone de la liaison avec l'élément mural (3) une épaisseur murale réduite par l'évidement (5).

10. Élément mural selon l'une des revendications 1 à 9,
**caractérisé en ce**
**que** l'élément mural fait partie d'un puits à câble à encastrer dans la terre.
